# FASCICULE DE BREVET EUROPEEN

(11) **EP 3 814 017 B1**
(45) Date de publication et mention de la délivrance du brevet: **07.06.2023**
(21) Numéro de dépôt: 19732711.7
(22) Date de dépôt: 28.06.2019
(51) Int. Cl.: B02C 19/00, B02C 23/16, B03B 9/06

(54) **DISPOSITIF DE FRAGMENTATION POUR FRAGMENTER LE VERRE D'UNE FENÊTRE**
FENSTERGLASSFRAGMENTIERUNGSVORRICHTUNG
WINDOW GLASS FRAGMENTATION DEVICE

(30) Priorité: 29.06.2018 FR 1856014
(43) Date de publication de la demande: 05.05.2021
(73) Titulaire: Saint-Gobain Glass France, 92400 Courbevoie (FR)
(72) Inventeur: BARBER, Gary, Yorkshire DN3 1SS (GB)
(74) Mandataire: Saint-Gobain Recherche
(86) Numéro de dépôt international: PCT/EP2019/067415
(87) Numéro de publication internationale: WO 2020/002642

(56) Documents cités:
- EP-A1- 0 618 011
- EP-A2- 0 811 433
- DE-C1- 19 715 818
- DE-U1- 9 419 250

## Description

La présente invention concerne un dispositif adapté pour fragmenter le verre d'une fenêtre usagée, un procédé de fragmentation correspondant, ainsi que le verre fragmenté obtenu par un tel procédé.

Le recyclage de fenêtre usagée est aujourd'hui une problématique de première importance ayant notamment pour enjeux la diminution des coûts de matière première vitrifiable et la réduction de l'empreinte environnementale des nouvelles fenêtres. Un tel recyclage implique la séparation du verre des fenêtres usagées de leur cadre.

Sont connus de l'état de la technique, dont le document EP0618011, des dispositifs de fragmentation du verre conçus à ces fins, qui comprennent un convoyeur adapté pour le transport à plat de fenêtres usagées et un ensemble de fragmentation surmontant ce convoyeur et étant adapté pour la fragmentation des fenêtres au cours de leur transport sur le convoyeur. Plus précisément, et tel qu'illustré par la Figure 1, qui fait référence au document EP0618011, la portion du convoyeur surmontée de l'ensemble de fragmentation comprend des ouvertures de chute de verre permettant au verre fragmenté de traverser le convoyeur pour être collecté dans un bac agencé en contrebas de l'ensemble de fragmentation. Le cadre de la fenêtre poursuit quant à lui sa course pour être collecté à l'extrémité avant du convoyeur.

Un tel dispositif de fragmentation présente de nombreux inconvénients. En premier lieu, sa mise en oeuvre impose l'utilisation d'un convoyeur dont la structure est spécifiquement adaptée pour permettre le passage du verre fragmenté au travers du convoyeur et sa collecte dans un bac dédié positionné en contrebas. Ainsi, cette solution technique exclue toute utilisation d'un tapis de convoyage continu, et met en oeuvre deux chaînes sans fin parallèles séparées par des entraîneurs et couplées avec une pince destinée à saisir le cadre d'une fenêtre usagée. De telles adaptations rendent particulièrement complexes la fabrication, la maintenance et le remplacement du convoyeur. La mise en oeuvre d'un tel dispositif impose de plus au bac de collecte de verre d'être agencé en contrebas du dispositif de fragmentation, ce qui introduit des contraintes supplémentaires de dimensionnement et de positionnement du bac de collecte. La mise en pente montante du convoyeur permet de ménager un plus grand espace en contrebas du dispositif de fragmentation, et donc d'y agencer un bac de collecte de verre de plus grande dimension.

L'invention vise à répondre aux inconvénients décrits ci-dessus. Plus particulièrement, dans au moins un mode de réalisation, la technique proposée se rapporte à un dispositif de fragmentation adapté pour fragmenter le verre d'une usagée, comprenant au moins :
- Un convoyeur adapté pour le transport à plat de ladite fenêtre selon un axe longitudinal,
- Un ensemble de fragmentation adapté pour fragmenter le verre de ladite fenêtre au cours de son transport sur ledit convoyeur,
ledit dispositif étant caractérisé en ce que :
- ledit convoyeur comprend un tapis de convoyage,
- ledit dispositif comprend un dispositif de tri sélectif du cadre de ladite fenêtre, agencé à une distance donnée de l'extrémité avant du convoyeur.

Dans l'ensemble de la description, un dispositif de fragmentation selon l'invention est adapté pour fragmenter le verre d'une fenêtre usagée en ce qu'il permet de désolidariser une vitre de fenêtre usagée de son cadre, en vue de leur recyclage respectif. La fragmentation du verre désigne l'action de casse, mise en morceaux, concassage, bris du verre d'une fenêtre, afin de le désolidariser de son cadre ou en d'autres termes, de les désunir, de les disjoindre, de les séparer « mécaniquement », de les désassembler. Dans tout le texte, l'avant et l'arrière du dispositif sont définis le long de l'axe longitudinal du convoyeur. Ce convoyeur est ainsi défini comme un dispositif mécanique adapté pour transporter une fenêtre usagée à plat, depuis l'extrémité arrière vers l'extrémité avant du dispositif. Un tel convoyeur est préférentiellement à bande ou à courroie.

L'invention repose sur le principe nouveau et inventif consistant à mettre en oeuvre un dispositif de tri sélectif du cadre à une distance prédéterminée en avant du convoyeur, et en particulier de son extrémité avant. Selon des modes de réalisation alternatifs, ce dispositif de tri sélectif peut être ou non lié mécaniquement au convoyeur. Par les termes « tri sélectif », on entend toute action permettant de collecter, récupérer, extraire le cadre afin de l'éloigner, de le séparer « spatialement » des débris de verre fragmenté agglomérés sur le tapis du convoyeur.

Dans la pratique, une fenêtre usagée à fragmenter est apposée à plat sur le tapis de convoyage, par exemple par un opérateur, et est acheminée vers l'ensemble de fragmentation, au niveau duquel le verre de la fenêtre est désolidarisé de son cadre. Suite à cette étape de fragmentation, les bris de verre et le cadre demeurent sur le tapis de convoyage et sont acheminés vers l'extrémité avant du convoyeur. C'est au niveau de cette extrémité avant qu'a lieu la séparation du verre fragmenté et du cadre. D'une part, les morceaux de verre sont éjectés à l'extrémité avant du tapis suivant un angle dépendant au moins de l'inclinaison du convoyeur et de sa vitesse de convoyage. Ces morceaux de verres peuvent alors être collectés dans un bac dédié. A la différence des bris de verre, la « tête » du cadre de fenêtre, c'est-à-dire sa partie la plus en avant sur le tapis de convoyage, poursuit sa course au-delà du tapis de convoyage et selon la direction d'acheminement pendant tout le temps où une portion suffisante du cadre est en contact avec le tapis pour permettre le maintien du cadre sur ce dernier. En l'absence d'obstacle, le cadre entame par la suite une chute selon une trajectoire dépendant au moins de l'inclinaison du convoyeur, de la vitesse de convoyage, de la géométrie du cadre, et de sa rigidité. Ces différents paramètres étant généralement connus de l'opérateur, il est possible pour ce dernier de faire une estimation de la trajectoire de chute du cadre.

Selon l'invention, un dispositif de récupération du cadre est agencé à une distance donnée en avant de l'extrémité avant du convoyeur. Cette distance donnée est préférentiellement prédéterminée de manière empirique et/ou évaluée au regard de l'estimation faite de la trajectoire de chute du cadre, de sorte qu'au cours de sa chute, le cadre entre dans le champ d'action de ce dispositif pour y être récupéré de manière sélective, et ainsi y être séparé « spatialement » du verre fragmenté.

Un tel dispositif de tri sélectif du cadre présente l'avantage d'être adaptable à tout type de dispositif de convoyage à plat d'une fenêtre usagée. L'utilisation d'un tel dispositif de tri permet notamment de s'affranchir de la nécessité que le convoyeur soit adapté pour permettre le passage du verre fragmenté au travers du convoyeur et sa collecte dans un bac dédié positionné en contrebas. Ainsi, ce dispositif de tri sélectif peut être agencé sur un convoyeur équipé d'un tapis de convoyage continu et dont la structure n'est pas contrainte par un choix particulier de dimensionnement ou de positionnement du bac de collecte. Le dispositif de tri et le convoyeur peuvent donc être remplacés indépendamment l'un de l'autre.

Par conséquent, un dispositif de fragmentation selon l'invention permet de trier sélectivement le cadre d'une fenêtre usagée tout en mettant en oeuvre un convoyeur peu complexe, robuste, qui est facile à produire et/ou à remplacer.

Selon un mode de réalisation particulier, ledit dispositif de tri sélectif comprend au moins un cylindre rotatif adapté pour réceptionner et entraîner en avant ledit cadre.

Un tel cylindre rotatif est adapté pour réceptionner ledit cadre en ce qu'il est positionné en contrebas de la trajectoire du cadre, de sorte qu'au cours de son avancée, le cadre est réceptionné sur ce cylindre et entraîné en avant par sa rotation. Les débris de verre issus de la fragmentation de la fenêtre usagée tombent quant à eux dans l'espace ménagé entre l'extrémité avant du convoyeur et le cylindre rotatif.

Selon un mode de réalisation particulier, ledit cylindre rotatif et/ou le tapis de convoyage sont recouverts au moins en partie d'un revêtement agrippant.

La mise en oeuvre d'un tel revêtement permet d'accroître l'adhérence du cadre et ainsi de faciliter son entraînement en avant.

Selon un mode de réalisation particulier, ledit convoyeur est incliné par rapport à l'horizontale d'un angle d'inclinaison compris entre 1° et 30°, préférentiellement entre 3° et 15°, encore préférentiellement entre 7 et 10°.

La mise en angle du convoyeur permet de changer la trajectoire du cadre. Il est alors possible d'élever davantage le dispositif de tri sélectif et/ou de l'éloigner par rapport à l'extrémité avant du convoyeur. A noter que l'adoption d'un angle d'inclinaison supérieur à 30° augmente les risques de retour en arrière de bris de verre, sous l'effet de la gravité.

Selon un mode de réalisation particulier, la hauteur dudit cylindre rotatif est égale ou inférieure à la hauteur de l'extrémité avant du convoyeur.

Un tel agencement relatif du cylindre rotatif permet de limiter le risque de voir la tête du cadre buter contre ce dernier au cours de sa chute.

Selon un mode de réalisation particulier, la position relative dudit cylindre rotatif par rapport audit convoyeur est ajustable.

Il est ainsi possible d'ajuster cette position relative du cylindre rotative en fonction des fenêtres usagées traitées, et en particulier en fonction de la taille des bris de verre et/ou des morceaux de cadre amenés à être éjectés à l'avant du convoyeur.

Selon un mode de réalisation particulier, la surface dudit cylindre rotatif et/ou la surface dudit tapis de convoyage sont nervurées.

La mise en oeuvre de nervures à la surface du tapis de convoyage permet de limiter les zones de contact entre ce dernier et la fenêtre usagée, en concentrant au niveau de ces seules zones les forces de réaction du tapis générées lors de l'impact.

Suite à la fragmentation, le verre fragmenté se dépose au fond des nervures, tandis que le cadre reste lui en appui sur les crêtes des nervures. La mise en oeuvre d'un tapis de convoyage nervuré participe donc à un premier triage du cadre et des débris de verre, suite à leur fragmentation.

Selon un mode de réalisation particulier, la valeur maximale d'écartement entre la surface du tapis de convoyage et la surface du cylindre rotatif est supérieure ou égale à 30 mm.

Dans toute la description, les valeurs d'écartement entre deux surfaces prennent en compte les reliefs éventuellement présents à la surface de chacune d'elles. Par exemple, dans le cas où chacune de ces deux surfaces est nervurée, la valeur minimale d'écartement correspond à la distance séparant chacune des crêtes de nervure, lorsque ces dernières sont alignées. A contrario, la valeur maximale d'écartement correspond à la distance séparant les creux respectifs de chacune des surfaces, lorsque ces derniers sont alignés.

Le maintien, entre la surface du tapis de convoyage et la surface du cylindre rotatif, d'une valeur maximale d'écartement supérieure à 30 mm, permet de limiter le risque de voir un débris de verre être collecté par le cylindre rotatif. Ainsi, cette valeur maximale d'écartement est déterminée de sorte à être plus importante que la taille maximale estimée d'un débris de verre. De cette façon, tout le verre concassé, qui s'accumule au creux des nervures, est collecté entre l'extrémité avant du convoyeur et le cylindre rotatif.

Selon un mode de réalisation particulier, la valeur minimale d'écartement entre la surface du tapis de convoyage et la surface du cylindre rotatif est inférieure ou égale à 50 mm, préférentiellement inférieure ou égale 30 mm.

Le maintien, entre la surface du tapis de convoyage et la surface du cylindre rotatif, d'une valeur minimale d'écartement inférieure à 30 mm, permet de limiter le risque de voir une portion de cadre tomber entre l'extrémité avant du convoyeur et le cylindre rotatif. Ainsi, cette valeur minimale d'écartement est déterminée de sorte à être inférieure à la taille minimale estimée d'une portion de cadre fragmenté. De cette façon, le cadre, qui repose sur les crêtes des nervures, est effectivement collecté par le cylindre rotatif.

Selon un mode de réalisation particulier, le dispositif de fragmentation comprend, en avant du cylindre rotatif, un plan incliné de pente négative.

Dans la pratique, le cadre de fenêtre fragmentée est ainsi acheminé sur ce plan incliné via le cylindre rotatif, pour être par la suite collecté dans un bac dédié. La mise en oeuvre de ce plan incliné permet de limiter le risque de retour accidentel du cadre dans le bac de collecte dédié aux bris de verre.

Selon un mode de réalisation particulier, le dispositif de fragmentation comprend une pluralité de cylindres rotatifs adaptés pour réceptionner et entraîner en avant ledit cadre.

Il est ainsi possible d'acheminer le cadre de fenêtre vers l'avant, tout en laissant la possibilité à d'éventuels bris de verre de tomber dans les espaces ménagés entre les cylindres rotatifs successifs.

Selon un mode de réalisation particulier, l'ensemble de fragmentation comprend un tambour agencé au-dessus dudit convoyeur selon un axe de révolution transversal audit axe longitudinal, ledit tambour étant lié par au moins une chaîne à un ensemble percuteur comprenant au moins une tête de percussion adaptée pour percuter le convoyeur à chaque révolution dudit tambour.

Dans l'ensemble de la description, une chaîne est une suite d'anneaux de métal engagés les uns dans les autres. Un tambour désigne un cylindre de bois ou de fer sur lequel vient s'enrouler cette chaîne. Ce tambour est adapté pour effectuer des révolutions, c'est-à-dire des mouvements circulaires effectués autour d'un axe de révolution. Le verbe « lier » doit être interprété dans son sens mécanique, et peut alternativement se référer à une liaison directe ou indirecte.

Dans la pratique, le tambour d'un tel ensemble de fragmentation est mis en rotation, préférentiellement par un moteur, autour d'un axe de révolution transversal à l'axe longitudinal du convoyeur ou en d'autres termes, à sa direction d'avancement. A chaque révolution du tambour, au moins une tête de percussion est d'abord amenée en surplomb du convoyeur pour par la suite venir percuter le tapis du convoyeur, sous l'effet de la gravité.

Cet ensemble de fragmentation est donc spécifiquement adapté pour la fragmentation à plat d'une fenêtre usagée agencée sur une surface de convoyage.

Le caractère flexible de cette chaîne permet de réduire les sollicitations mécaniques exercées aux points d'ancrage de la chaîne avec le tambour d'une part, et avec l'ensemble percuteur d'autre part. De plus, une telle chaîne ne fournit aucune entrave à l'accélération verticale de chaque tête de percussion, au moment de leur chute, ce qui permet de maximiser la force d'impact de cette tête sur le verre, et donc d'obtenir une fragmentation satisfaisante du verre. A noter de plus que l'armement des marteaux est plus aisé, compte tenu de la répartition avantageuse du poids de l'ensemble percuteur et de la chaîne sur leur surface de contact avec le tambour.

Selon un mode de réalisation particulier, l'ensemble de fragmentation comprend une pluralité de têtes de percussion alignées selon une direction transversale.

La collision simultanée d'une pluralité de têtes avec le verre permet de maximiser la puissance instantanée de l'impact tout en la répartissant sur une grande surface de verre. Il est ainsi possible de fragmenter efficacement la fenêtre usagée ciblée en une multitude de bris de verre de taille réduite. En conséquence, le tri effectué ultérieurement entre les bris de verre et le cadre est rendu plus aisé.

L'invention concerne aussi un procédé de fragmentation du verre d'une fenêtre, caractérisé en ce qu'il met en oeuvre un dispositif de fragmentation adapté pour fragmenter à plat le verre d'une fenêtre usagée, ledit dispositif comprenant au moins :
- Un convoyeur adapté pour le transport à plat de ladite fenêtre selon un axe longitudinal,
- Un ensemble de fragmentation adapté pour fragmenter le verre de ladite fenêtre au cours de son transport sur ledit convoyeur, et dans lequel :
- ledit convoyeur comprend un tapis de convoyage,
- ledit dispositif comprend un dispositif de tri sélectif du cadre de ladite fenêtre, agencé à une distance donnée de l'extrémité avant du convoyeur.

Selon un mode de réalisation particulier, la vitesse de convoyage du cadre de fenêtre au niveau de l'extrémité avant du convoyeur est inférieure ou égale à la vitesse de rotation périphérique dudit au moins un cylindre rotatif.

Dans le présent texte, la « vitesse de rotation périphérique » correspond à la vitesse de rotation du cylindre rotatif au niveau de son point de rayon maximal. Le maintien d'un rapport positif de la vitesse périphérique dudit cylindre rotatif sur la vitesse de convoyage permet de faciliter l'entraînement en avant du cadre par ce cylindre rotatif.

Selon un mode de réalisation particulier, une roue dentée d'entraînement du cylindre rotatif est liée via une courroie à une roue dentée agencée sur le flanc d'un rouleau d'entraînement du convoyeur. La roue dentée du convoyeur entraîne alors celle du cylindre rotatif, le rapport entre leurs deux vitesses variant en fonction de leur diamètre respectif et du nombre de dents dont chacune de ces roues est respectivement dotée.

L'invention concerne également le verre fragmenté obtenu via un tel procédé de fragmentation.

D'autres caractéristiques et avantages de l'invention apparaîtront à la lecture de la description suivante de modes de réalisation particuliers, donnés à titre de simples exemples illustratifs et non limitatifs, et des figures annexées, pour lesquelles :
La figure 1 est une vue schématique en coupe d'un dispositif de fragmentation connu de l'état de la technique,
Les figures 2 et 3 sont des vues schématiques en coupe d'un dispositif de fragmentation selon un premier mode de réalisation de l'invention ;
Les figures 4 et 5 sont des vues schématiques en coupe d'un dispositif de fragmentation selon un deuxième mode de réalisation de l'invention ;

Les différents éléments illustrés par les figures ne sont pas nécessairement représentés à l'échelle réelle, l'accent étant davantage porté sur la représentation du fonctionnement général de l'invention.

Sur les différentes figures, sauf indication contraire, les numéros de référence qui sont identiques représentent des éléments similaires ou identiques.

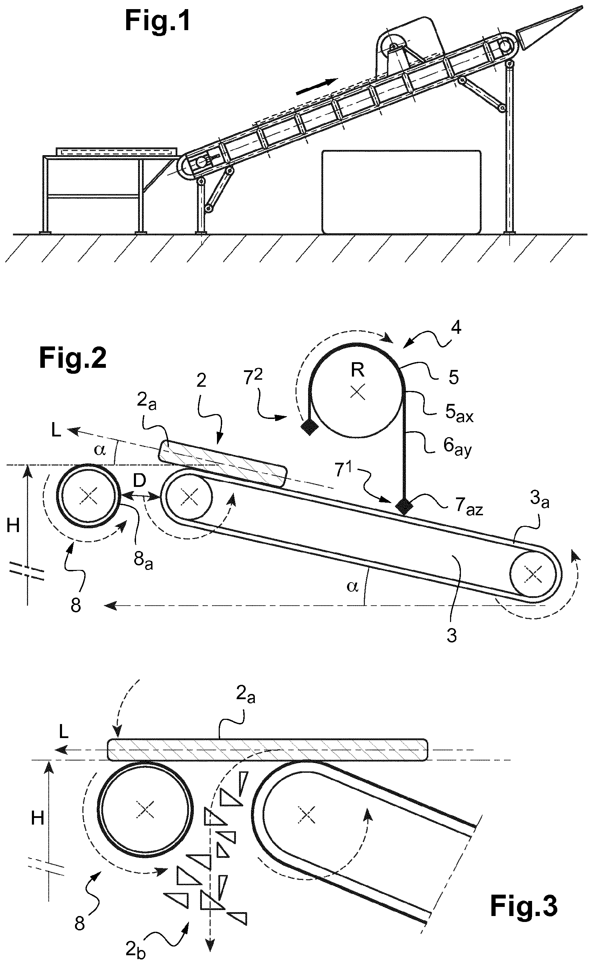

Les figures 2 et 3 sont des vues schématiques en coupe d'un dispositif de fragmentation selon un premier mode de réalisation de l'invention. Un tel dispositif de fragmentation 1 est adapté pour fragmenter le verre 2b d'une fenêtre 2 usagée, et comprend :
- Un convoyeur 3 équipé d'un tapis de convoyage adapté pour le transport à plat de la fenêtre 2 selon un axe longitudinal L, et
- Un ensemble de fragmentation 4 qui surmonte le convoyeur 3 et est adapté pour fragmenter le verre de la fenêtre 2 au cours de son transport sur le convoyeur 3.

Le convoyeur 3 est incliné par rapport à l'horizontale d'un angle d'inclinaison α de 8°.

Le dispositif de fragmentation 1 comprend un cylindre rotatif 8a agencé à la même hauteur H et à une distance Dmax de 45 mm de l'extrémité avant du convoyeur 3. Ce cylindre rotatif 8a est adapté pour réceptionner et entraîner en avant le cadre 2a, et a donc pour fonction de trier sélectivement le cadre 2a afin de le séparer des bris de verre 2b.

De manière avantageuse, le cylindre rotatif 8a et le tapis de convoyage 3a sont recouverts d'un revêtement agrippant, qui permet d'accroître l'adhérence du cadre et ainsi de faciliter son entraînement en avant.

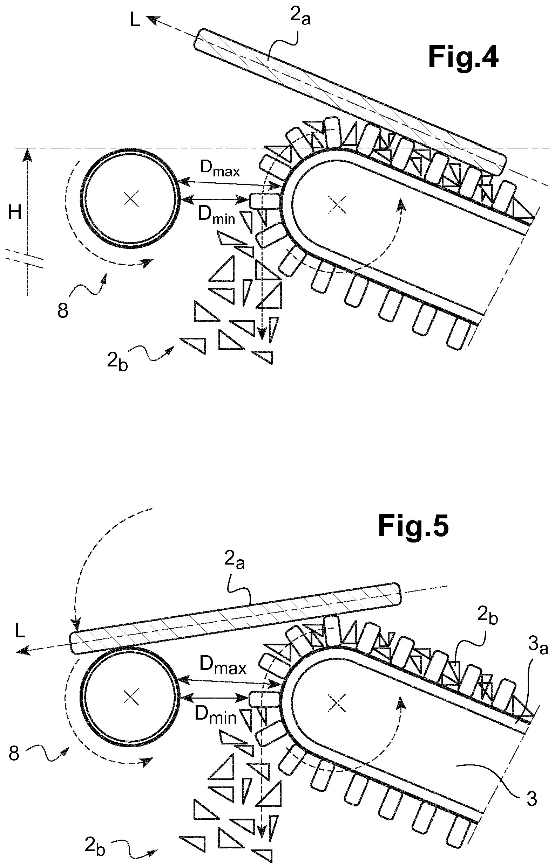

Selon les modes de réalisation illustrés par les figures 2 et 4, l'ensemble de fragmentation 4 comprend un tambour 5 agencé au-dessus du convoyeur 3 selon un axe de révolution R transversal à l'axe longitudinal L. Le tambour 5 est lié à deux ensembles percuteurs (7¹, 7²) par deux groupements de chaînes 6ay, chaque ensemble percuteur 7¹ comprenant une pluralité de têtes (7a1, 7a2,...,7az) de percussion adaptées pour percuter le convoyeur 3 à chaque révolution du tambour 5. Pour chaque ensemble percuteur 7, les têtes de percussions (7a1, 7a2, ..., 7az) sont alignées selon une direction transversale Rz. Aussi, à des fins de clarté et compte tenu du fait que la Figure 2 est une vue schématique en coupe prise selon un plan perpendiculaire à cette direction transversale, seule une chaîne 6ay et une tête de percussion 7az sont représentées par ensemble percuteur 7.

Dans la pratique, une fenêtre usagée 2 est d'abord chargée sur tapis de convoyage 3a, à l'arrière du dispositif 1. Cette fenêtre usagée 2 est ensuite acheminée par le convoyeur 3 au niveau de l'ensemble de fragmentation 4, c'est-à-dire approximativement en contrebas du tambour 5. Ce tambour 5 est mis en rotation, préférentiellement par un moteur, autour d'un axe de révolution R transversal à l'axe longitudinal L du convoyeur 3 ou en d'autres termes, à sa direction d'avancement. Cette direction d'avancement L est représentée sur la Figure 2 par une flèche directionnelle en pointillés.

Selon les modes de réalisation particuliers illustrés par les Figures 2 à 5, le tambour 5 et les moyens d'entraînement du convoyeur 3 sont mis en rotation selon des directions opposées, chacune de ces directions étant représentée par des flèches directionnelles en pointillés. Ainsi, à chaque révolution du tambour 5, au moins une tête de percussion 7az est d'abord amenée en surplomb du convoyeur 3 pour par la suite venir percuter le tapis du convoyeur 3a, sous l'effet de la gravité. Lors de la fragmentation, le verre 2a de la fenêtre usagée 2 est ainsi séparé de son cadre 2b.

Suite à l'étape de fragmentation, le cadre 2b et les bris de verre 2a demeurent sur le tapis de convoyage 3a et sont acheminés vers l'extrémité avant du convoyeur 3a, tel qu'illustré par la figure 2.

C'est au niveau de cette extrémité avant qu'a lieu la séparation « spatiale » du verre fragmenté 2b et du cadre 2a. D'une part, les morceaux de verre 2b sont éjectés à l'extrémité avant du tapis suivant un angle dépendant au moins de l'inclinaison du convoyeur 3 et de sa vitesse de convoyage. Ces morceaux de verres 2b peuvent alors être collectés dans un bac dédié (non représenté).

A la différence des bris de verre 2b, la « tête » du cadre 2a poursuit sa course au-delà du tapis 3a de convoyage et selon la direction d'acheminement pendant tout le temps où une portion suffisante du cadre 2a est en contact avec le tapis 3a pour permettre le maintien du cadre sur ce dernier. Le cadre 2a entame par la suite une chute selon une trajectoire dépendant au moins de l'inclinaison du convoyeur 3, de la vitesse de convoyage, de la géométrie du cadre 2a, et de sa rigidité. Ces différents paramètres étant généralement connus de l'opérateur, il est possible pour ce dernier de faire une estimation de la trajectoire de chute du cadre 2a.

Tel qu'illustré par la figure 3, le cylindre rotatif 8 est positionné en contrebas de la trajectoire du cadre 2a, de sorte qu'au cours de son avancée, le cadre 2a est réceptionné sur ce cylindre 8 et entraîné en avant par sa rotation, tel qu'illustré sur la figure 3 par des flèches directionnelles en pointillés, dans l'objectif d'être collecté dans un bac dédié aux cadres (non représenté). Les débris de verre 2b issus de la fragmentation de la fenêtre usagée 2 tombent quant à eux dans l'espace ménagé entre l'extrémité avant du convoyeur 3 et le cylindre rotatif 8.

De manière avantageuse, la vitesse de convoyage du cadre 2a de fenêtre au niveau de l'extrémité avant du convoyeur 3 est inférieure ou égale à la vitesse de rotation périphérique du un cylindre rotatif 8a.

Par conséquent, ce dispositif de fragmentation permet de trier sélectivement le cadre 2a d'une fenêtre usagée 2 tout en mettant en oeuvre un convoyeur 3 peu complexe, robuste, qui est facile à produire et/ou à remplacer, ce qui permet de faciliter l'entraînement en avant du cadre 2a par ce cylindre rotatif 8.

Les figures 4 et 5 sont des vues schématiques en coupe d'un dispositif de fragmentation 1 selon un deuxième mode de réalisation de l'invention, qui diffère du premier en ce que le tapis 3a de convoyage est équipé de nervures d'une hauteur de crête de 25 mm.

La valeur maximale Dmax d'écartement entre la surface du tapis de convoyage 3a et la surface du cylindre rotatif 8a restant la même, c'est-à-dire étant de 45 mm, on peut en déduire que la valeur minimale Dmin d'écartement entre ces deux surfaces, c'est-à-dire la distance séparant les crêtes de nervure de la surface du cylindre rotatif 8, est de 20 mm.

Suite à l'étape de fragmentation, le verre fragmenté 2b se dépose au fond des nervures, tandis que le cadre 2a reste lui en appui sur les crêtes des nervures, tel qu'illustré par les figures 4 et 5.

Une fois arrivé à l'extrémité avant du convoyeur 3, le cadre 2a poursuit sa trajectoire, porté par ces nervures, tandis que les bris de verre 2b accumulés dans le creux des nervures chutent entre le convoyeur 3 et le cylindre rotatif 8. Du fait de la mise en oeuvre de ces nervures, le cadre 2a et les bris de verre 2b ne sont pas confrontés au même écart entre le convoyeur 3 et le cylindre rotatif 8. Ainsi, l'écart auquel sont confrontés les bris de verre 2b est de 45 mm, ce qui permet de limiter le risque de voir un débris de verre 2b être collecté par le cylindre rotatif 8. Par opposition, l'écart auquel est confronté le cadre 2a est de 20 mm, ce qui permet de limiter le risque de voir portion de cadre 2a tomber entre l'extrémité avant du convoyeur 3 et le cylindre rotatif 8. De cette façon, le cadre 2a est effectivement collecté par le cylindre rotatif 8 et séparé « spatialement » des bris de verre 2b.

## Revendications

1. Dispositif de fragmentation (1) adapté pour fragmenter le verre d'une fenêtre (2) usagée, comprenant au moins :
- Un convoyeur (3) adapté pour le transport à plat de ladite fenêtre (2) selon un axe longitudinal (L),
- Un ensemble de fragmentation (4) adapté pour fragmenter le verre de ladite fenêtre (2) au cours de son transport sur ledit convoyeur (3),
ledit dispositif (1) étant **caractérisé en ce que** :
- ledit convoyeur comprend un tapis de convoyage (3a),
- ledit dispositif (1) comprend un dispositif de tri sélectif (8) du cadre (2a) de ladite fenêtre (2), agencé à une distance donnée de l'extrémité avant du convoyeur (3).

2. Dispositif de fragmentation (1) selon la revendication 1, **caractérisé en ce que** ledit dispositif de tri sélectif (8) comprend au moins un cylindre rotatif (8a) adapté pour réceptionner et entraîner en avant ledit cadre (2a).

3. Dispositif de fragmentation (1) selon la revendication 2, **caractérisé en ce que** ledit cylindre rotatif (8a) et/ou le tapis de convoyage sont recouverts au moins en partie d'un revêtement agrippant.

4. Dispositif de fragmentation (1) selon l'une des revendications 2 ou 3, **caractérisé en ce que** ledit convoyeur (3) est incliné par rapport à l'horizontale d'un angle d'inclinaison (α) compris entre 1° et 30°, préférentiellement entre 3° et 15°, encore préférentiellement entre 7 et 10°.

5. Dispositif de fragmentation (1) selon l'une des revendications 2 à 4, **caractérisé en ce que** la hauteur (H) dudit cylindre rotatif (8a) est égale ou inférieure à la hauteur de l'extrémité avant du convoyeur (3).

6. Dispositif de fragmentation (1) selon l'une des revendications 2 à 5, **caractérisé en ce que** la position relative dudit cylindre rotatif (8a) par rapport audit convoyeur (3) est ajustable.

7. Dispositif de fragmentation (1) selon l'une des revendications 2 à 6, **caractérisé en ce que** la surface dudit cylindre rotatif (8a) et/ou la surface dudit tapis de convoyage sont nervurées.

8. Dispositif de fragmentation (1) selon l'une des revendications 2 à 7, **caractérisé en ce que** la valeur maximale (Dmax) d'écartement entre la surface du tapis de convoyage (3a) et la surface du cylindre rotatif (8a) est supérieure ou égale à 30 mm.

9. Dispositif de fragmentation (1) selon l'une des revendications 2 à 8, **caractérisé en ce que** la valeur minimale (Dmin) d'écartement entre la surface du tapis de convoyage (3a) et la surface du cylindre rotatif (8a) est inférieure ou égale à 50 mm, préférentiellement inférieure ou égale 30 mm.

10. Dispositif de fragmentation (1) selon l'une des revendications 2 à 9, **caractérisé en ce qu'**il comprend, en avant du cylindre rotatif (8a), un plan incliné de pente négative.

11. Dispositif de fragmentation (1) selon l'une des revendications 2 à 10, **caractérisé en ce qu'**il comprend une pluralité de cylindres rotatifs (8a) adaptés pour réceptionner et entraîner en avant ledit cadre (2a).

12. Dispositif de fragmentation (1) selon l'une des revendications 1 à 11, **caractérisé en ce que** l'ensemble de fragmentation (4) comprend un tambour (5) agencé au-dessus dudit convoyeur (3) selon un axe de révolution (R) transversal audit axe longitudinal (L), ledit tambour (5) étant lié par au moins une chaîne (6a) à un ensemble percuteur (7) comprenant au moins une tête (7a) de percussion adaptée pour percuter le convoyeur (3) à chaque révolution dudit tambour (5).

13. Procédé de fragmentation du verre d'une fenêtre (2) usagée, **caractérisé en ce qu'**il met en oeuvre un dispositif de fragmentation (1) adapté pour fragmenter à plat le verre (2b) d'une fenêtre (2) usagée, ledit dispositif (1) comprenant au moins :
- Un convoyeur (3) adapté pour le transport à plat de ladite fenêtre (2) selon un axe longitudinal (L),
- Un ensemble de fragmentation (7) adapté pour fragmenter le verre (2b) de ladite fenêtre (2) au cours de son transport sur ledit convoyeur (3), et dans lequel :
- ledit convoyeur (3) comprend un tapis de convoyage (3a),
- ledit dispositif (1) comprend un dispositif de tri sélectif (8) du cadre (2a) de ladite fenêtre (2), agencé à une distance donnée (Dmax) de l'extrémité avant du convoyeur (3).

14. Procédé de fragmentation selon la revendication 13, **caractérisé en ce que** la vitesse de convoyage du cadre (2a) de fenêtre au niveau de l'extrémité avant du convoyeur (3) est inférieure ou égale à la vitesse de rotation périphérique dudit au moins un cylindre rotatif (8a).

## Patentansprüche

1. Fragmentierungsvorrichtung (1), die ausgelegt ist, das Glas eines gebrauchten Fensters (2) zu fragmentieren, umfassend mindestens:
- einen Förderer (3), der für den Flachtransport des Fensters (2) entlang einer Längsachse (L) ausgelegt ist,
- eine Fragmentierungsbaugruppe (4), die ausgelegt ist, das Glas des Fensters (2) während dessen Transports auf dem Förderer (3) zu fragmentieren, wobei die Vorrichtung (1) **dadurch gekennzeichnet ist, dass** :
- der Förderer ein Förderband (3a) umfasst,
- die Vorrichtung (1) eine Vorrichtung zum selektiven Sortieren (8) des Rahmens (2a) des Fensters (2) umfasst, die in einem gegebenen Abstand vom vorderen Ende des Förderers (3) angeordnet ist.

2. Fragmentierungsvorrichtung (1) nach Anspruch 1, **dadurch gekennzeichnet, dass** die Vorrichtung zum selektiven Sortieren (8) mindestens einen Drehzylinder (8a) umfasst, der ausgelegt ist, den Rahmen (2a) aufzunehmen und vorwärts zu treiben.

3. Fragmentierungsvorrichtung (1) nach Anspruch 2, **dadurch gekennzeichnet, dass** der Drehzylinder (8a) und/oder das Förderband zumindest teilweise mit einer griffigen Beschichtung bedeckt sind.

4. Fragmentierungsvorrichtung (1) nach einem der Ansprüche 2 oder 3, **dadurch gekennzeichnet, dass** der Förderer (3) in Bezug auf die Horizontale eines Neigungswinkels (a) zwischen 1° und 30°, bevorzugt zwischen 3° und 15°, noch bevorzugter zwischen 7° und 10°, geneigt ist.

5. Fragmentierungsvorrichtung (1) nach einem der Ansprüche 2 bis 4, **dadurch gekennzeichnet, dass** die Höhe (H) des Drehzylinders (8a) gleich oder kleiner ist als die Höhe des vorderen Endes des Förderers (3).

6. Fragmentierungsvorrichtung (1) nach einem der Ansprüche 2 bis 5, **dadurch gekennzeichnet, dass** die relative Position des Drehzylinders (8a) in Bezug auf den Förderer (3) einstellbar ist.

7. Fragmentierungsvorrichtung (1) nach einem der Ansprüche 2 bis 6, **dadurch gekennzeichnet, dass** die Oberfläche des Drehzylinders (8a) und/oder die Oberfläche des Förderbandes gerippt sind.

8. Fragmentierungsvorrichtung (1) nach einem der Ansprüche 2 bis 7, **dadurch gekennzeichnet, dass** der Maximalwert (Dmax) des Abstands zwischen der Oberfläche des Förderbands (3a) und der Oberfläche des Drehzylinders (8a) größer als oder gleich 30 mm ist.

9. Fragmentierungsvorrichtung (1) nach einem der Ansprüche 2 bis 8, **dadurch gekennzeichnet, dass** der Mindestwert (Dmin) des Abstands zwischen der Oberfläche des Förderbands (3a) und der Oberfläche des Drehzylinders (8a) kleiner als oder gleich 50 mm, vorzugsweise kleiner als oder gleich 30 mm, ist.

10. Fragmentierungsvorrichtung (1) nach einem der Ansprüche 2 bis 9, **dadurch gekennzeichnet, dass sie** vor dem Drehzylinder (8a) eine geneigte Ebene mit negativer Neigung umfasst.

11. Fragmentierungsvorrichtung (1) nach einem der Ansprüche 2 bis 10, **dadurch gekennzeichnet, dass sie** eine Vielzahl von Drehzylindern (8a) umfasst, die ausgelegt sind, den Rahmen (2a) aufzunehmen und vorwärts zu treiben.

12. Fragmentierungsvorrichtung (1) nach einem der Ansprüche 1 bis 11, **dadurch gekennzeichnet, dass** die Fragmentierungsbaugruppe (4) eine Trommel (5) umfasst, die oberhalb des Förderers (3) entlang einer Drehachse (R) quer zur Längsachse (L) angeordnet ist, wobei die Trommel (5) über mindestens eine Kette (6a) mit einer Schlagbaugruppe (7) verbunden ist, die mindestens einen Schlagkopf (7a) umfasst, der ausgelegt ist, um bei jeder Umdrehung der Trommel (5) auf den Förderer (3) aufzuschlagen.

13. Verfahren zum Fragmentieren des Glases eines gebrauchten Fensters (2), **dadurch gekennzeichnet, dass es**
eine Fragmentierungsvorrichtung (1) einsetzt, die ausgelegt ist, das Glas (2b) eines gebrauchten Fensters (2) flach zu fragmentieren, wobei die Vorrichtung (1) mindestens Folgendes umfasst:
- einen Förderer (3), der für den Flachtransport des Fensters (2) entlang einer Längsachse (L) ausgelegt ist,
- eine Fragmentierungsbaugruppe (7), die ausgelegt ist, um das Glas (2b) des Fensters (2) während des Transports auf dem Förderer (3) zu fragmentieren, und wobei:
- der Förderer (3) ein Förderband (3a) umfasst,
- die Vorrichtung (1) eine Vorrichtung zum selektiven Sortieren (8) des Rahmens (2a) des Fensters (2) umfasst, die in einem gegebenen Abstand (Dmax) vom vorderen Ende des Förderers (3) angeordnet ist.

14. Fragmentierungsverfahren nach Anspruch 13, **dadurch gekennzeichnet, dass** die Fördergeschwindigkeit des Fensterrahmens (2a) im Bereich des vorderen Endes des Förderers (3) kleiner als oder gleich der Umfangsdrehgeschwindigkeit des mindestens einen Drehzylinders (8a) ist.

## Claims

1. A fragmentation device (1) designed to fragment the glass of a used window (2), comprising at least:
- a conveyor (3) designed to transport said window (2), flat, along a longitudinal axis (L),
- a fragmentation assembly (4) designed to fragment the glass of said window (2) as it is being transported on said conveyor (3),
said device (1) being **characterized in that**:
- said conveyor comprises a conveyor belt (3a),
- said device (1) comprises a device (8) for the selective sorting of the frame (2a) of said window (2), which device is positioned at a given distance from the front end of the conveyor (3).

2. The fragmentation device (1) as claimed in claim 1, **characterized in that** said selective sorting device (8) comprises at least one rotary cylinder (8a) designed to receive said frame (2a) and drive it forward.

3. The fragmentation device (1) as claimed in claim 2, **characterized in that** said rotary cylinder (8a) and/or the conveyor belt are covered at least in part with a grip-enhancing coating.

4. The fragmentation device (1) as claimed in one of claims 2 and 3, **characterized in that** said conveyor(3) is inclined with respect to the horizontal by an angle of inclination (a) comprised between 1° and 30°, preferably between 3° and 15°, more preferably still, between 7° and 10°.

5. The fragmentation device (1) as claimed in one of claims 2 to 4, **characterized in that** the height (H) of said rotary cylinder (8a) is equal to or less than the height of the front end of the conveyor (3).

6. The fragmentation device (1) as claimed in one of claims 2 to 5, **characterized in that** the relative position of said rotary cylinder (8a) with respect to said conveyor (3) is adjustable.

7. The fragmentation device (1) as claimed in one of claims 2 to 6, **characterized in that** the surface of said rotary cylinder (8a) and/or the surface of said conveyor belt are ribbed.

8. The fragmentation device (1) as claimed in one of claims 2 to 7, **characterized in that** the maximum value (Dmax) for the separation between the surface of the conveyor belt (3a) and the surface of the rotary cylinder (8a) is greater than or equal to 30 mm.

9. The fragmentation device (1) as claimed in one of claims 2 to 8, **characterized in that** the minimum value (Dmin) for the separation between the surface of the conveyor belt (3a) and the surface of the rotary cylinder (8a) is less than or equal to 50 mm, preferably less than or equal to 30 mm.

10. The fragmentation device (1) as claimed in one of claims 2 to 9, **characterized in that** it comprises, in front of the rotary cylinder (8a), an inclined plane of negative gradient.

11. The fragmentation device (1) as claimed in one of claims 2 to 10, **characterized in that** it comprises a plurality of rotary cylinders (8a) designed to receive said frame (2a) and drive it forward.

12. The fragmentation device (1) as claimed in one of claims 1 to 11, **characterized in that** the fragmentation assembly (4) comprises a drum (5) arranged above said conveyor (3) along an axis of revolution (R) transverse to said longitudinal axis (L), said drum (5) being connected by at least one chain (6a) to an impactor assembly (7) comprising at least one percussion head (7a) designed to strike the conveyor (3) upon each revolution of said drum (5).

13. A method for fragmenting the glass of a used window (2), **characterized in that** it implements a fragmentation device (1) suited to fragmenting, in the flat state, the glass (2b) of a used window (2), said device (1) comprising at least:
- a conveyor (3) designed to transport said window (2), flat, along a longitudinal axis (L),
- a fragmentation assembly (7) designed to fragment the glass (2b) of said window (2) as it is being transported on said conveyor (3), and in which:
- said conveyor (3) comprises a conveyor belt (3a),
- said device (1) comprises a device (8) for the selective sorting of the frame (2a) of said window (2), which device is positioned at a given distance (Dmax) from the front end of the conveyor (3).

14. The fragmentation method as claimed in claim 13, **characterized in that** the speed at which the window frame (2a) is conveyed at the front end of the conveyor (3) is less than or equal to the tangential rotational velocity of said at least one rotary cylinder (8a).
